# DEMANDE DE BREVET EUROPEEN

(11) **EP 0 886 415 A1**
(43) Date de publication de la demande: **23.12.1998**
(21) Numéro de dépôt: 98201934.1
(22) Date de dépôt: 09.06.1998
(51) Int. Cl.: H04M 1/02, H01R 23/72, H01R 9/09

(54) **Appareil électronique comportant un accumulateur et un contact de charge et equipement conportant un tel appareil.**

(30) Priorité: 13.03.1998 FR 9803138; 17.06.1997 FR 9707511
(71) Demandeur: Koninklijke Philips Electronics N.V., 5621 BA Eindhoven (NL)
(72) Inventeur: Lebert, Philippe, 75008 Paris (FR); Flegeo, Arnaud, 75008 Paris (FR)
(74) Mandataire: Lottin, Claudine

(57) **Abrégé**

L'invention concerne un appareil pour réaliser un contact de charge entre des circuits imprimés sur une carte et une source d'alimentation. L'appareil comprend un boîtier (1) et une carte électronique (2) comportant une plage métallique (3) reliée à un contact de charge (4) d'une part et à des circuits (5) à alimenter en courant électrique d'autre part. La carte (2) est maintenue au boîtier (1) par au moins un moyen de fixation (6) fixé à la carte (2) sur la plage métallique (3) et fixé au boîtier (1) sur une zone de fixation (7). Le moyen de fixation (6) comporte une partie conductrice (8) entre le contact de charge (4) et la plage métallique (3) pour conduire le courant depuis le contact de charge (4) jusqu'aux circuits à alimenter (5).
Application : appareils électroniques portables alimentés par un accumulateur.

## Description

L'invention concerne un appareil comprenant un boîtier et une carte électronique comportant une plage métallique reliée à un contact de charge d'une part et à des circuits à alimenter en courant électrique d'autre part, la carte étant maintenue solidairement au boîtier par au moins un moyen de fixation.

L'invention concerne également un équipement électronique comportant un tel appareil.

Elle s'applique notamment à tout équipement électronique portable comportant des circuits électroniques devant être alimentés en courant électrique au moyen d'un accumulateur. Elle s'applique en particulier aux radiotéléphones alimentés par une batterie rechargeable.

Le document de brevet publié sous le numéro GB 2 222 864 A décrit un appareil comportant un circuit imprimé sur une carte et alimenté par des fils de batterie connectés au circuit par des serre-fils. La carte est fixée à un boîtier par des vis. La fixation au boîtier et le contact de charge sont ainsi réalisés par des éléments séparés : des vis et des serre-fils.

Un objet de l'invention est de fournir un appareil peu coûteux à fabriquer grâce à un montage simplifié et un nombre de pièces réduit. Le document cité prévoit l'utilisation de vis de fixation pour fixer la carte au boîtier et de serre-fils connectés aux circuits à alimenter et aux fils de batterie pour réaliser un contact de charge. L'invention propose d'associer ces deux fonctions de fixation et de contact de charge dans un seul moyen. Pour cela, un appareil du genre mentionné dans le préambule est remarquable en ce que le contact de charge est réalisé par le moyen de fixation.

Selon une caractéristique importante de l'invention, le moyen de fixation est monté sur ladite plage métallique d'une part et sur une zone de fixation du boîtier d'autre part et comprend une partie conductrice entre la zone de fixation et la plage métallique pour réaliser ledit contact de charge. De cette façon, on associe les deux fonctions de fixation et de contact de charge ce qui permet en outre de gagner de la place sur la carte.

Selon un premier mode de réalisation de l'invention, le moyen de fixation comprend une vis comportant une tête, une rondelle de contact pour effectuer le contact électrique entre la plage métallique et la tête et une tige filetée pour permettre un vissage dans le boîtier. Le contact de charge est ainsi réalisé entre la tête de la vis et la plage métallique.

Selon un deuxième mode de réalisation de l'invention, le boîtier comporte une face externe formant une zone de contact électrique et une face interne, lesdites faces communiquant par un orifice débouchant dans la zone de contact électrique d'une part et dans la zone de fixation d'autre part et ledit contact de charge est formé par une couche de métallisation dudit moyen de fixation et de l'orifice pour réaliser un contact électrique à travers ledit orifice entre la zone de contact électrique et la plage métallique. Ici, la zone de contact bordant l'orifice joue le rôle de la tête de vis pour former le contact de charge.

La description suivante, faite en regard des dessins ci-annexés, le tout donné à titre d'exemple non limitatif fera bien comprendre comment l'invention peut être réalisée.

La figure 1 représente schématiquement un appareil selon l'invention.

La figure 2 représente un mode de réalisation d'un moyen de l'invention pour assurer une double fonction de fixation et de contact de charge dans l'appareil de la figure 1.

La figure 3 illustre un premier mode de réalisation de l'invention incorporant le moyen représenté à la figure 2.

La figure 4 est un exemple d'application de l'invention selon le premier mode de réalisation.

La figure 5 illustre un deuxième mode de réalisation de l'invention.

La figure 6 est un exemple d'application de l'invention selon le deuxième mode de réalisation.

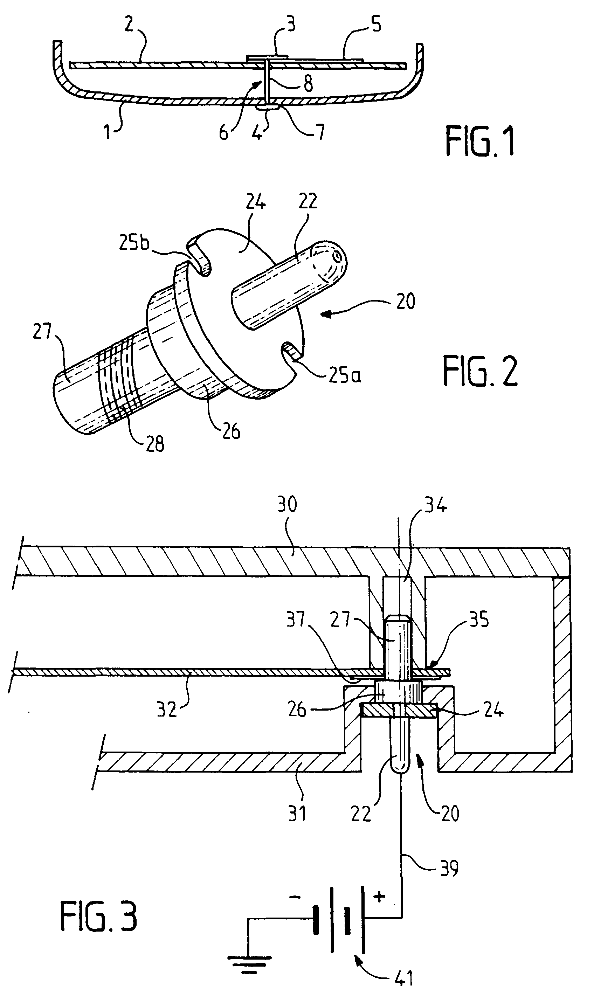

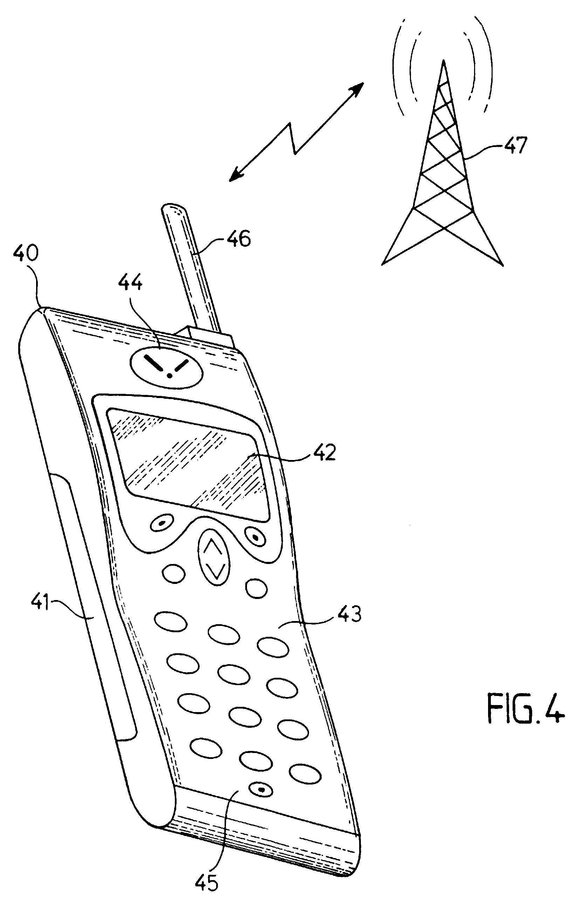

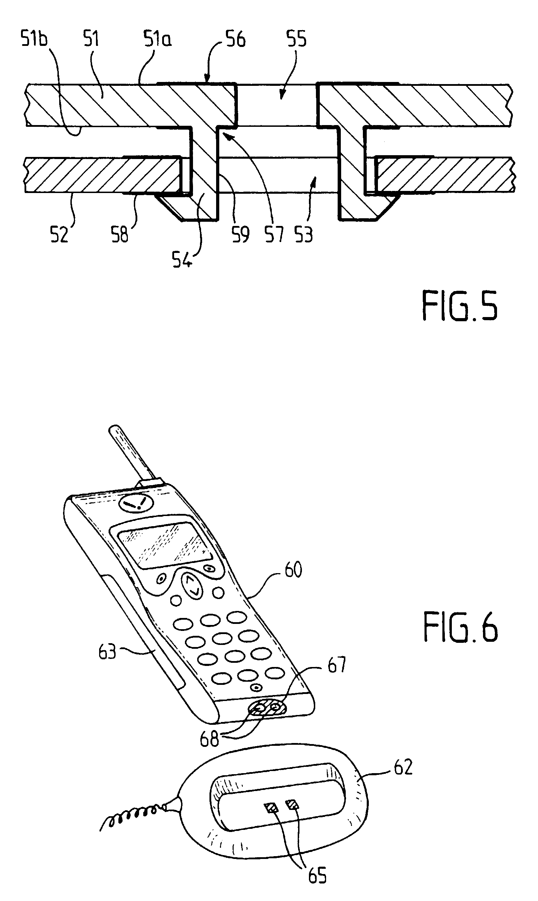

Les figures 1 à 4 représentent des appareils pour réaliser un contact de charge entre une source de courant et des circuits à alimenter. Deux types d'applications de ces appareils vont être décrits. Dans le premier type, la source de courant peut être une batterie ou un accumulateur qui une fois chargé(e), alimente des circuits électroniques (figure 4). Dans le deuxième type, la source de courant est un dispositif de recharge couramment appelé chargeur pour recharger un accumulateur comportant des circuits à alimenter (figure 5).

Sur la figure 1 on a représenté un appareil très simple comportant tous les éléments essentiels de l'invention. Il comprend un boîtier 1 et une carte électronique 2 sur laquelle une plage métallique 3 est reliée à un contact de charge 4 et à des circuits 5. Ces circuits sont alimentés en courant électrique par une source de courant (non représentée) à travers le contact de charge 4 et la plage métallique 3. La carte 2 est maintenue solidairement au boîtier 1 par un moyen de fixation 6, monté sur la plage métallique 3 d'une part et sur une zone de fixation 7 du boîtier 1 d'autre part. Le moyen de fixation 6 comprend une partie conductrice 8 entre la zone de fixation 7 et la plage métallique 3 pour réaliser ledit contact de charge 4.

D'autres moyens de fixation peuvent être prévus mais ne participent pas à l'invention. Le contact de charge 4 est ainsi réalisé par le moyen de fixation 6 qui assure une liaison électrique avec la plage métallique.

La figure 2 représente un mode de réalisation du moyen de fixation 6, constitué d'une vis en matériau conducteur (par exemple en acier ou en laiton) pour conduire le courant recueilli à une source de courant (par exemple une batterie d'alimentation) vers des circuits de la carte électronique. Bien que l'exemple décrit représente une vis, tout autre moyen de fixation pouvant conduire le courant pourrait être utilisé.

La conduction est rendue possible ici par le montage de la vis métallique contre une plage conductrice de la carte, de préférence métallique. La vis peut être simplement recouverte d'une couche de métal dans sa partie supérieure qui réalise le contact électrique. Pour réaliser le transfert de courant de la batterie vers les circuits électroniques, on utilise d'ailleurs deux contacts, un pour chaque pôle de la batterie. Le contact de masse ne faisant pas partie de l'invention.

La vis 20 représentée à la figure 2 comporte :
- une tête 22 destinée à établir le contact de charge avec la source de courant électrique,
- une rondelle de pression 24 pour maintenir une partie du boîtier contre la carte, cette rondelle étant percée de deux petites fentes 25a et 25b pour permettre l'entraînement de la vis en rotation à l'aide d'un outil spécial,
- une rondelle de contact 26, de diamètre inférieur à celui de la rondelle de pression 24, destinée à effectuer le contact électrique avec une partie conductrice de la carte,
- une tige 27 munie d'un filetage ISO 28 pour permettre un vissage dans le boîtier.

La figure 3 représente une vue en coupe simplifiée d'un premier mode de réalisation de l'invention comprenant la vis 20. Le boîtier 1 est schématisé par deux coques 30 et 31 réalisées dans un matériau isolant. Elles sont assemblées de façon à prendre en sandwich la carte 32. La coque 30 comporte un fût de vissage 34 destiné à accueillir la tige filetée de la vis et une zone de contact 35 destinée à venir en butée contre une face d'une partie de la carte 32, cette partie étant percée d'un trou pour être traversée par la tige de la vis.

La coque 31 présente un épaulement destiné à recevoir la rondelle de pression 24 qui, avec l'aide du couple fût de vissage 34 / tige filetée 27 permet de maintenir la carte 32 solidaire du boîtier 30, 31. La vis exerce ainsi une fonction de fixation de la carte électronique au boîtier. Pour sa fonction de contact de charge, elle utilise une plage conductrice 37 de la carte 32, reliée aux circuits électroniques à alimenter.

En effet, lorsque la vis est serrée, la rondelle 24 exerçant une pression sur la coque 31, la carte 32 est prise en sandwich entre la coque 30 et la rondelle métallique 26 qui réalise ainsi un contact électrique avec la plage conductrice 37 de la carte. Comme la tête de la vis 22 est reliée au fil de batterie 39 correspondant au pôle positif de la batterie 41, le courant de batterie est conduit à travers la tête 22, les rondelles 24, 26 et la plage 37 vers les circuits de la carte 32 qui doivent être alimentés.

Un exemple d'application de ce mode de réalisation est représenté à la figure 4. Il s'agit d'un radiotéléphone, mais l'invention peut être appliquée à tout autre dispositif électronique fonctionnant avec des batteries d'alimentation.

Le radiotéléphone comporte un boîtier 40, une batterie d'alimentation 41 et des circuits électroniques (non représentés) intégrés sur une carte située à l'intérieur du boîtier 40. Un écran 42, un clavier 43, un haut-parleur 44 et un microphone 45 assurent l'interface avec l'utilisateur. Un circuit d'émission / réception également intégré sur la carte coopère avec une antenne 46 pour échanger des signaux radioélectriques avec un site de base 47.

La carte est fixée au boîtier 40 par la vis de fixation 20 qui maintien la carte serrée entre deux coques du boîtier comme l'illustre la figure 3 et réalise en même temps le contact de charge de la batterie.

La figure 5 représente un autre mode de réalisation n'utilisant pas de vis de fixation mais un ou plusieurs clips, en matière plastique de préférence, pour faciliter le montage de la carte sur le boîtier. En effet, un montage en force de la carte sur le clip est plus simple à exécuter de façon automatique qu'un vissage qui nécessite un outillage plus perfectionné. Un autre avantage de ce mode de réalisation est qu'il peut être utilisé pour recharger un accumulateur. Dans cette application, le contact de charge est réalisé entre l'accumulateur et son dispositif de recharge.

La figure 5 représente une vue en coupe partielle d'un boîtier 51 et d'une carte électronique 52 percée d'une ouverture 53, le plan de coupe passant par cette ouverture. La carte 52 est maintenue au boîtier 51 par un clip plastique 54 dont l'extrémité coudée est introduite dans l'ouverture 53 pour retenir la carte 52. Le boîtier comporte une face externe 51a et une face interne 51b communiquant par un orifice 55 débouchant de part et d'autre dans une zone de contact électrique 56 et dans une zone de fixation 57 de la face interne. Le clip plastique 54 est fixé à la zone de fixation 57 d'une part et à une plage métallique 58 de la carte d'autre part. Il est recouvert d'une couche de métallisation 59 allant de la plage métallique 58 jusqu'à la zone de contact 56 à travers l'orifice 55. La couche métallique 59 peut être obtenue par dépôt électrolytique de peinture métallisée ou par tout autre moyen équivalent.

La figure 6 représente un boîtier de radiotéléphone 60 et son chargeur 62 selon le mode de réalisation de la figure 5. Le radiotéléphone 60 est muni d'une batterie 63 pouvant être rechargée à l'aide du chargeur 62. Dans ce mode de réalisation, le contact de charge est réalisé par deux contacts d'alimentation mais ce nombre n'est pas limitatif. En effet, le transfert du courant et des données entre le chargeur et le radiotéléphone nécessite souvent plusieurs broches de connexion selon les applications envisagées. La recharge s'effectue par transfert de courant électrique depuis des contacts d'alimentation 65 du chargeur 62 vert des fils d'alimentation (non représentés) de la batterie 63. Le transfert s'effectue au moyen d'une zone de contact 67 reliée électriquement, le long des parois internes des orifices 68, à un support métallique à l'intérieur du boîtier 60 auquel sont connectés les fils d'alimentation de la batterie. Le support (ou plage) métallique se trouve sur une carte électronique fixée au boîtier selon le mode de réalisation représenté à la figure 5.

Ainsi, a-t-on décrit un appareil électronique peu coûteux, facile à monter et ayant de multiple applications dans le domaine des appareils électroniques portables. Bien entendu, l'invention n'est pas limitée aux modes de réalisation qui viennent d'être décrits et représentés. Des variantes de réalisation de l'invention apparaîtront à l'homme de l'art, ces variantes ne sortant pas du cadre de l'invention.

## Revendications

1. Appareil comprenant un boîtier (1) et une carte électronique (2) comportant une plage métallique (3) reliée à un contact de charge (4) d'une part et à des circuits (5) à alimenter en courant électrique d'autre part, la carte (2) étant maintenue solidairement au boîtier (1) par au moins un moyen de fixation (6),
caractérisé en ce que le contact de charge (4) est réalisé par le moyen de fixation (6).

2. Appareil selon la revendication 1, caractérisé en ce que :
• le moyen de fixation (6 ; 54) est monté sur ladite plage métallique (3 ; 58) d'une part et sur une zone de fixation (7 ; 57) du boîtier (1 ; 51) d'autre part et
• qu'il comprend une partie conductrice (8 ; 59) entre la zone de fixation (7 ; 57) et la plage métallique (3 ; 58) pour réaliser ledit contact de charge (4).

3. Appareil selon la revendication 1, caractérisé en ce que le moyen de fixation (6) comprend une vis (20) comportant une tête (22), une rondelle de contact (26) pour effectuer le contact électrique entre la plage métallique et la tête (22) et une tige filetée (27) permettant un vissage dans le boîtier (30 ; 31).

4. Appareil selon la revendication 1, caractérisé en ce que le moyen de fixation (6 ; 54) comprend un clip en matériau plastique (54) revêtu d'une couche de métal (59).

5. Appareil selon la revendication 2, caractérisé :
• en ce que le boîtier (51) comporte une face externe (51a) formant une zone de contact électrique (56) et une face interne (51b), lesdites faces (51a ; 51b) communiquant par un orifice (55) débouchant dans la zone de contact électrique (56) d'une part et dans la zone de fixation (57) d'autre part,
• et en ce que ledit contact de charge est formé par une couche de métallisation (59) dudit moyen de fixation (54) et de l'orifice (55) pour réaliser un contact électrique à travers ledit orifice entre la zone de contact électrique (56) et la plage métallique (58).

6. Appareil selon la revendication 5, caractérisé en ce que ladite couche de métallisation (59) est formée par dépôt électrolytique de peinture métallisée.

7. Equipement électronique (10) comportant un appareil selon l'une des revendications 1 à 6 et un accumulateur (11) pour fournir ledit courant électrique.

8. Equipement électronique (60) comprenant :
- un appareil selon la revendication 5, lesdits circuits à alimenter étant reliés à un accumulateur (63) destiné à être rechargé par ledit courant électrique,
- un boîtier de recharge (62) muni de contacts d'alimentation (65) pour fournir ledit courant électrique,
- un moyen de conduction pour conduire le courant électrique depuis les contacts d'alimentation (65) vers la zone de contact électrique (67), caractérisé en ce que lesdits moyens de conduction sont réalisés par une mise en contact mécanique de ladite zone de contact électrique (67) et desdits contacts d'alimentation (65).
